# EUROPÄISCHE PATENTSCHRIFT

(11) **EP 2 197 587 B1**
(45) Veröffentlichungstag und Bekanntmachung des Hinweises auf die Patenterteilung: **07.03.2012**
(21) Anmeldenummer: 08802800.6
(22) Anmeldetag: 07.10.2008
(51) Int. Cl.: B03C 3/10, F16C 33/76, F16C 35/04

(54) **ANORDNUNG ZUM ABDICHTEN VON EINEM WÄLZLAGER**
ASSEMBLY FOR SEALING AN ANTI-FRICTION BEARING
ENSEMBLE POUR ETANCHEIFIER UN PALIER A ROULEMENT

(30) Priorität: 09.10.2007 DE 102007048557
(43) Veröffentlichungstag der Anmeldung: 23.06.2010
(73) Patentinhaber: AB SKF, 415 50 Göteborg (SE)
(72) Erfinder: VOM STEIN, Hans-Joachim, 51519 Odenthal (DE)
(74) Vertreter: Kohl, Thomas
(86) Internationale Anmeldenummer: PCT/EP2008/008432
(87) Internationale Veröffentlichungsnummer: WO 2009/049788

(56) Entgegenhaltungen:
- EP-A- 0 892 471
- EP-A- 0 936 368
- GB-A- 2 348 468
- US-B1- 6 357 923

## Beschreibung

Die Erfindung betrifft eine Anordnung zum Abdichten eines Zugangs zu einem abzudichtenden Raum.

Als Abdichtungen bezeichnet man in der Technik Elemente oder Konstruktionen, die die Aufgabe haben, ungewollte Stoffübergänge von einem Raum in einen anderen Raum zu verhindern bzw. zu begrenzen. Dabei unterscheidet man ganz grob in Berührungsdichtungen und berührungslose Dichtungen. Beispielsweise bei Wälzlagern werden Abdichtungen zum Schutz des Wälzlagers vor dem Zutritt von Feststoffen wie Staub und/oder Flüssigkeiten wie Wasser eingesetzt. Dabei wirken die Dichtungen zwischen einem bestimmungsgemäß stillstehenden und einem bewegten Teil des Wälzlagers. Eine solche Dichtung ist offenbart in Dokument EP O 936 368A

Eine Aufgabe der vorliegenden Erfindung ist es, eine verbesserte Anordnung zum Abdichten zu schaffen.

Gemäß Anspruch 1 umfasst eine Anordnung zum Abdichten eines Zugangs zu einem abzudichtenden Raumes folgende Merkmale:
- In einem ersten Bereich des Zugangs ist wenigstens eine, an einen Pol einer Hochspannungsquelle anschließbare Aufladungselektrode angeordnet,
- in einem dem ersten Bereich gegenüberliegenden zweiten Bereich des Zugangs ist eine Gegenelektrode angeordnet, und
- die Elektroden sind derart aufeinander abgestimmt angeordnet, dass eine sich zwischen den Elektroden ausbildende Influenzierungszone auf influenzierbare Teilchen, die von außen in Richtung des abzudichtenden Raums vordringen, derart wirkt, dass diese in Richtung weg vom abzudichtenden Raum beschleunigt werden.

Mit der vorausgehend beschriebenen Anordnung gemäß dem Anspruch 1 wird ein völlig neuer Typ von Abdichtung geschaffen, der mit Vorteil berührungsfrei arbeitet und gleichzeitig Dichtigkeiten sicherstellt, wie sie sonst nur bei schleifenden Dichtungen bekannt sind, ohne aber dabei mit einem Abrieb oder einem Verschleiß einherzugehen. Die erfindungsgemäße Anordnung vereint somit die Vorteile bisheriger klassischer berührungsloser und schleifender Dichtungen. Dabei ist mit weiterem Vorteil zum Betrieb der Anordnung lediglich eine elektrische Leistung von wenigen Watt erforderlich.

Damit die influenzierten Teilchen in Richtung weg vom abzudichtenden Raum beschleunigt werden, sind in einer vorteilhaften Ausgestaltung die beiden Elektroden in Richtung von außen hin zum abzudichtenden Raum derart zueinander versetzt angeordnet, dass die Influenzierungszone zu besagter Richtung eine Schrägstellung aufweist, wobei von außen her gesehen die Gegenelektrode insbesondere vor der Aufladungselektrode angeordnet ist. Insbesondere ist dabei die Aufladungselektrode als eine Koronaaufladungselektrode ausgebildet und eine Mehrzahl von Aufladungselektroden vorgesehen, wobei jede mit einer in den Zugang hineinragenden Spitze ausgebildet ist, und insbesondere die Spitzen mit besagter Schrägstellung ausgebildet und angeordnet sind.

Die hohe Dichtigkeit wird dabei im Wesentlichen dadurch erzielt, dass im elektrischen Feld von der Gegenelektrode zur Aufladungselektrode im Sinne einer harten Koronaaufladung ein Plasmakanal gebildet wird, mit welchem Ladung, nämlich Elektronen von den Teilchen zu der Aufladungselektrode transportiert werden. Die so influenzierten Teilchen werden von der Gegenelektrode auf kurzem Wege angezogen und schlagen dort auf. Insofern es sich dabei um Flüssigkeitsteilchen handelt, haften diese dort, einen Flüssigkeitsfilm ausbildend adhäsiv an. Sind dabei sich an die Gegenelektrode anschließende Teilbereiche des Zugangs beispielsweise mit einer Schrägstellung ausgebildet, wird die sich auf der Gegenelektrode bei Betrieb der Anordnung niederschlagende Flüssigkeit von der Gegenelektrode weg in einen vorgebbaren Zielbereich geleitet. Handelt es sich bei den Teilchen um Partikel in einer im Wesentlichen trockenen Umgebung, so werden diese vom abzudichtenden Raum weg aus dem Zugang herausgeschleudert.

In einer vorteilhaften Ausgestaltung ist eine Mehrzahl von als Koronaaufladungselektroden ausgebildeten Aufladungselektroden vorgesehen, von denen jede mit einem als Spitze ausgebildetem Fortsatz gestaltet ist, und die Spitzen so angeordnet sind, dass ihre paraboloidförmigen Influenzierungszonen den Zugang möglichst vollständig abdecken. Es darf also zwischen den einzelnen Influenzierungszonen der einzelnen Fortsätze bzw. Spitzen kein Freiraum verbleiben.

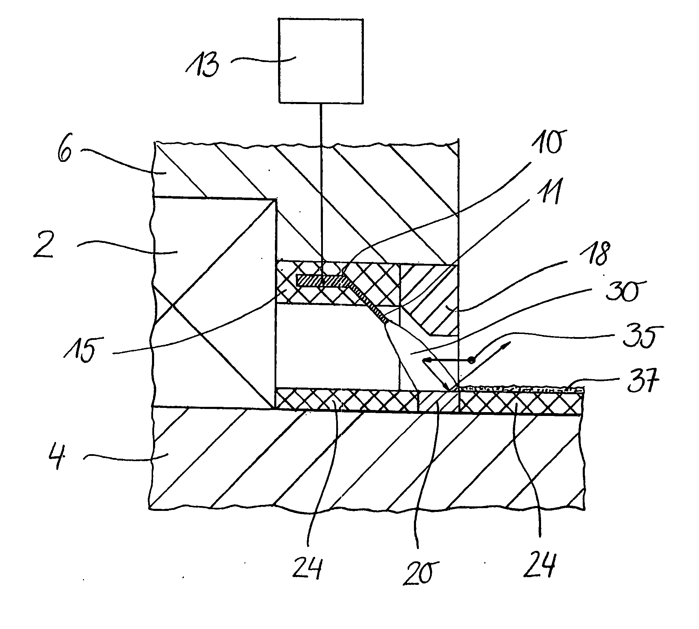

Weitere Vorteile, Merkmale und Einzelheiten der Erfindung ergeben sich aus dem im Folgenden beschriebenen Ausführungsbeispiel der Erfindung anhand der Figur.

Die Figur zeigt dabei als ein Ausführungsbeispiel der Erfindung einen ausschnittsweisen Längsschnitt im Bereich einer Hauptlagerung einer Rotorhauptwelle 4 einer Windkraftanlage. Die Hauptlagerung umfasst dabei ein Wälzlager 2, das für ein drehbares Lagern der Rotorhauptwelle 4 gegenüber einem Gehäuse 6 der Windkraftanlage zwischen der Rotorhauptwelle 4 und dem Gehäuse 6 angeordnet ist. Dabei ist das Wälzlager 2 an wenigstens einer seiner Stirnseiten durch eine Abdichtungsanordnung gegen Verunreinigungen geschützt, die von außen her in das Wälzlager 2 vordringen wollen.

Die Abdichtungsanordnung umfasst dabei einen aus einem elektrisch isolierenden Material, insbesondere Polyurethan oder Flüssigsilikon, ausgebildeten Trägerring 15, in dem in Umfangsrichtung verteilt eine Vielzahl von Koronaaufladungselektroden 10 angeordnet ist. Dabei umfasst die in der Figur dargestellte Koronaaufladungselektrode 10 eine Spitze 11, die am rechten Bereich des Innenmantels des Trägerrings 15 schräg nach außen aus dem Trägerring 15 herausragt. Jede der Koronaaufladungselektroden 10 ist über einen je Koronaaufladungselektrode 10 vorgesehenen hochohmigen, nicht dargestellten, beispielsweise in den Trägerring 15 integrierten Widerstand, mit dem positiven Pol einer Hochspannungs-DC-Quelle 13 verbunden. Die Hochspannung ist dabei bevorzugt in einem Bereich zwischen 3 bis 12 kV gewählt.

Der dargestellten Koronaaufladungselektrode 10 schräg gegenüberliegend ist eine ringartige Gegenelektrode 20 angeordnet, wobei diese über die beispielsweise aus Stahl ausgebildete Rotorhauptwelle 4 geerdet ist. An beide Stirnseiten der ringartig ausgebildeten Gegenelektrode 20 anschließend sind dabei Isolierringe 24 auf der Rotorhauptwelle 4 angeordnet.

Die Gegenelektrode 20 ist bezüglich den Koronaaufladungselektroden 10 axial weiter außen angeordnet, so dass sich eine schräg geneigte Influenzierungszone 30 zwischen den Koronaaufladungselektroden 10 und der Gegenelektrode 20 ergibt. Dies bewirkt, dass von außen her in Richtung des Wälzlagers 2 vordringende flüssige und/oder feste Partikel 35 in der Influenzierungszone 30 influenziert werden und massiv hin zur Gegenelektrode 20 beschleunigt werden. Nach einem Auftreffen der Partikel 35 auf der Gegenelektrode 20 werden diese entladen und entweder von einem sich bildenden Flüssigkeitsfilm 37 im Falle flüssiger Partikel 35 durch Adhäsion gehalten und gegen die Beschleunigungsrichtung abgeführt oder durch die Wirkung des Impulses im Falle einer vollständigen trockenen Umgebung herausgeschleudert, wie dies für den dargestellten Partikel 35 mit Pfeilen angedeutet ist. Mit anderen Worten kann man auch davon sprechen, dass zwischen den Elektroden 10 und 20 unter bestimmten Bedingungen sich je nach Spannung unterschiedlich geformte Plasmaschläuche ausbilden und damit auch von einer Art Blasrichtung bzw. einem zwischen den Elektroden 10 und 20 entstehenden Ionenwind gesprochen werden kann, der eine Wirbelströmung erzeugt, die wie eine Barriere wirkt.

Damit die einzelnen Koronaaufladungselektroden 10 mit ihren jeweiligen Influenzierungszonen von außen her gesehen die lückenlose Influenzierungszone 30 bewirken, ist dem Trägerring 15 ein Schutzring 18, beispielsweise ebenfalls aus Polyurethan oder Flüssigsilikon vorgeschaltet, der einen kleineren Innendurchmesser aufweist als die Enden der Spitzen 11 der Koronaaufladungselektroden 10.

Mit der vorausgehend beschriebenen Abdichtungsanordnung sind mit Vorteil auch besonders hohe Anforderungen an Abdichtungen, beispielsweise gegen Staub und Feuchtigkeit, erfüllbar. Der Einsatz der vorausgehend beschriebenen Abdichtungsanordnung ist dabei keinesfalls auf den Einsatz bei Windkraftanlagen und/oder Wälzlagern begrenzt. Ein Einsatz ist dabei natürlich auch bei nicht ringförmigen, beispielsweise geradlinigen Dichtspalten von Vorteil.

### Bezugszeichenliste

- 2: Wälzlager
- 4: Rotorhauptwelle
- 6: Gehäuse

- 10: Koronaaufladungselektrode
- 11: Spitzen
- 13: Hochspannungs-DC-Quelle
- 15: Trägerring
- 18: Schutzring

- 20: Gegenelektrode
- 24: Isolierring

- 30: Influenzierungszone
- 35: Partikel
- 37: Flüssigkeitsfilm

## Patentansprüche

1. Anordnung zum Abdichten eines Zugangs zu einem abzudichtenden Raum, umfassend folgende Merkmale:
- In einem ersten Bereich des Zugangs ist wenigstens eine, an einen Pol einer Hochspannungsquelle anschließbare Aufladungselektrode angeordnet,
- in einem dem ersten Bereich gegenüberliegenden zweiten Bereich des Zugangs ist eine Gegenelektrode angeordnet, und
- die Elektroden sind derart aufeinander abgestimmt angeordnet, dass eine sich zwischen den Elektroden ausbildende Influenzierungszone auf influenzierbare Teilchen, die von außen in Richtung des abzudichtenden Raums vordringen, derart wirkt, dass diese in Richtung weg vom abzudichtenden Raum beschleunigt werden.

2. Anordnung nach Anspruch 1, wobei die beiden Elektroden in Richtung von außen hin zum abzudichtenden Raum derart zueinander versetzt angeordnet sind, dass die Influenzierungszone zu besagter Richtung eine Schrägstellung aufweist, oder wobei von außen her gesehen die Gegenelektrode vor der Aufladungselektrode angeordnet ist.

3. Anordnung nach einem der Ansprüche 1 oder 2, wobei die Aufladungselektrode als eine Koronaaufladungselektrode ausgebildet ist.

4. Anordnung nach einem der Ansprüche 1 bis 3, wobei die Aufladungselektrode einen in den Zugang hineinragenden Fortsatz oder einen in den Zugang hineinragenden, als eine Spitzte ausgebildeten Fortsatz umfasst.

5. Anordnung nach einem der Ansprüche 2 bis 4, wobei der Fortsatz oder die Spitze mit besagter Schrägstellung ausgebildet und angeordnet ist.

6. Anordnung nach einem der Ansprüche 1 bis 5, wobei eine Mehrzahl von Aufladungselektroden vorgesehen ist.

7. Anordnung nach Anspruch 6, wobei jeder Aufladungselektrode eine Influenzierungszone zugehört und die Aufladungselektroden derart angeordnet sind, das die Influenzierungszonen aller Aufladungselektroden zusammen den Zugang vollständig abdecken.

8. Anordnung nach Anspruch 7, wobei für das vollständige Abdecken die Aufladungselektroden in etwa senkrecht zu einer, von außen hin zum abzudichtenden Raum verlaufenden Richtung zurückgesetzt in einer Einbauchung der Zugangsabgrenzung angeordnet sind.

9. Anordnung nach einem der Ansprüche 1 bis 8, wobei sich an den Oberflächenbereich der Gegenelektrode, der den Aufladungselektroden gegenüberliegt, Oberflächenbereiche der Anordnung anschließen, die elektrisch isolierend ausgebildet sind.

10. Anordnung nach einem der Ansprüche 1 bis 9, wobei die Gegenelektrode geerdet ausgebildet ist.

11. Anordnung nach einem der Ansprüche 1 bis 10, wobei die Gegenelektrode und/oder wenigstens Teilbereiche des Zugangs derart ausgebildet und/oder angeordnet sind, dass die hin zur Gegenelektrode beschleunigten Teilchen in einen vorgebbaren Zielbereich weggeleitet werden.

12. Anordnung nach einem der Ansprüche 1 bis 11, wobei die Aufladungselektroden mit dem positiven Pol einer Hochspannungs-DC-Quelle verbunden sind, und/oder wobei die Hochspannung der Hochspannungsquelle in etwa zwischen 3 bis 12 kV liegt.

13. Anordnung nach einem der Ansprüche 1 bis 12, wobei die Teilchen Partikel einer Flüssigkeit und/oder eines Feststoffes sind.

14. Anordnung nach einem der Ansprüche 1 bis 13, wobei der Zugang spaltartig und/oder ringartig ist.

15. Anordnung nach einem der Ansprüche 1 bis 14, wobei die Anordnung als Abdichtung einer Wälzlagerung, insbesondere in einer Windkraftanlage eingesetzt ist.

## Claims

1. Arrangement for sealing off an access to a space to be sealed off, comprising the following features:
- at least one charge electrode, which can be connected to a terminal of a high-voltage source, is arranged in a first region of the access,
- a counter electrode is arranged in a second region of the access opposite the first region, and
- the electrodes are arranged so as to be matched to one another in such a way that an influencing zone forming between the electrodes acts on influenceable particles which advance from the outside in the direction of the space to be sealed off in such a way that said particles are accelerated in the direction away from the space to be sealed off.

2. Arrangement according to Claim 1, wherein the two electrodes are arranged so as to be offset with respect to one another in the direction from the outside towards the space to be sealed off in such a way that the influencing zone has an inclined position with respect to said direction, or wherein, when viewed from the outside, the counter electrode is arranged in front of the charge electrode.

3. Arrangement according to either of Claims 1 and 2, wherein the charge electrode is in the form of a corona charge electrode.

4. Arrangement according to one of Claims 1 to 3, wherein the charge electrode comprises a protrusion protruding into the access or a protrusion in the form of a point which protrudes into the access.

5. Arrangement according to one of Claims 2 to 4, wherein the protrusion or the point is formed and arranged with said inclined position.

6. Arrangement according to one of Claims 1 to 5, wherein a plurality of charge electrodes is provided.

7. Arrangement according to Claim 6, wherein each charge electrode has an associated influencing zone and the charge electrodes are arranged in such a way that the influencing zones of all of the charge electrodes together completely cover the access.

8. Arrangement according to Claim 7, wherein, for the complete coverage, the charge electrodes are arranged in an inward bulge of the access boundary, set back approximately perpendicular to a direction running from the outside towards the space to be sealed off.

9. Arrangement according to one of Claims 1 to 8, wherein surface regions of the arrangement which are electrically insulating adjoin that surface region of the counter electrode which is opposite the charge electrodes.

10. Arrangement according to one of Claims 1 to 9, wherein the counter electrode is grounded.

11. Arrangement according to one of Claims 1 to 10, wherein the counter electrode and/or at least subregions of the access are formed and/or arranged in such a way that the particles accelerated towards the counter electrode are conducted away into a predeterminable target region.

12. Arrangement according to one of Claims 1 to 11, wherein the charge electrodes are connected to the positive terminal of a high-voltage DC source, and/or wherein the high voltage of the high-voltage source is approximately between 3 and 12 kV.

13. Arrangement according to one of Claims 1 to 12, wherein the particles are particles of a liquid and/or a solid.

14. Arrangement according to one of Claims 1 to 13, wherein the access is in the form of a slot and/or a ring.

15. Arrangement according to one of Claims 1 to 14, wherein the arrangement is used as a seal for a roller bearing arrangement, in particular in a wind energy installation.

## Revendications

1. Arrangement pour rendre étanche un accès vers un espace à rendre étanche, comprenant les caractéristiques suivantes :
- au moins une électrode de charge qui peut être raccordée à un pôle d'une source de haute tension est disposée dans une première zone de l'accès,
- une contre-électrode est disposée dans une deuxième zone, à l'opposé de la première zone, et
- les électrodes sont disposées en étant accordées l'une à l'autre de telle sorte qu'une zone d'influence de particules influençables qui parviennent depuis l'extérieur en direction de l'espace à rendre étanche, laquelle se forme entre les électrodes, agit de telle sorte que celles-ci sont accélérées dans la direction opposée à l'espace à rendre étanche.

2. Arrangement selon la revendication 1, avec lequel les électrodes sont disposées en étant décalées l'une par rapport à l'autre dans la direction de l'extérieur vers l'espace à rendre étanche de telle sorte que la zone d'influence dans ladite direction présente une obliquité, ou avec lequel la contre-électrode, vue depuis l'extérieur, est disposée avant l'électrode de charge.

3. Arrangement selon la revendication 1 ou 2, avec lequel l'électrode de charge est réalisée sous la forme d'une électrode de charge à effet de couronne.

4. Arrangement selon l'une des revendications 1 à 3, avec lequel l'électrode de charge présente un prolongement qui fait saillie dans l'accès ou un prolongement réalisé sous la forme d'une pointe qui fait saillie dans l'accès.

5. Arrangement selon l'une des revendications 2 à 4, avec lequel le prolongement ou la pointe est configuré et disposé avec ladite obliquité.

6. Arrangement selon l'une des revendications 1 à 5, avec lequel est prévue une pluralité d'électrodes de charge.

7. Arrangement selon la revendication 6, avec lequel chaque électrode de charge appartient à une zone d'influence et les électrodes de charge sont disposées de telle sorte que les zones d'influence de toutes les électrodes de charge ensemble couvrent entièrement l'accès.

8. Arrangement selon la revendication 7, avec lequel, pour la couverture complète, les électrodes de charge sont disposées à peu près perpendiculairement à une direction qui s'étend depuis l'extérieur vers l'espace à rendre étanche, en retrait dans une concavité de la délimitation de l'accès.

9. Arrangement selon l'une des revendications 1 à 8, avec lequel des zones de la surface de l'arrangement qui sont réalisées électriquement isolées se raccordent au niveau de la zone de la surface de la contre-électrode qui se trouve à l'opposé des électrodes de charge.

10. Arrangement selon l'une des revendications 1 à 9, avec lequel la contre-électrode est réalisée reliée à la terre.

11. Arrangement selon l'une des revendications 1 à 10, avec lequel la contre-électrode et/ou au moins des zones partielles de l'accès sont réalisées et/ou disposées de telle sorte que les particules accélérées en direction de la contre-électrode sont déviées dans une zone ciblée pouvant être prédéfinie.

12. Arrangement selon l'une des revendications 1 à 11, avec lequel les électrodes de charge sont reliées avec le pôle positif d'une source de haute tension à courant continu et/ou avec lequel la haute tension de la source de haute tenson se trouve approximativement entre 3 et 12 kV.

13. Arrangement selon l'une des revendications 1 à 12, avec lequel les particules sont des particules d'un liquide et/ou d'une matière solide.

14. Arrangement selon l'une des revendications 1 à 13, avec lequel l'accès est en forme d'interstice et/ou en forme d'anneau.

15. Arrangement selon l'une des revendications 1 à 14, avec lequel l'arrangement est utilisé comme élément d'étanchéité d'un palier à roulement, notamment dans une installation à énergie éolienne.
